# EUROPEAN PATENT SPECIFICATION

(11) **EP 2 262 986 B1**
(45) Date of publication and mention of the grant of the patent: **13.05.2015**
(21) Application number: 09719413.8
(22) Date of filing: 11.03.2009
(51) Int. Cl.: F01N 9/00, F01N 3/20

(54) **METHOD FOR HEATING A SCR SYSTEM**
VERFAHREN ZUR ERWÄRMUNG EINES SCR-SYSTEMS
PROCÉDÉ POUR CHAUFFER UN SYSTÈME DE RÉDUCTION CATALYTIQUE SÉLECTIVE

(30) Priority: 11.03.2008 FR 0851583
(43) Date of publication of application: 22.12.2010
(73) Proprietor: Inergy Automotive Systems Research (Société Anonyme), 1120 Bruxelles (BE)
(72) Inventor: PEUCAT, Frédéric, B-1000 Brussels (BE); LEONARD, Stephane, B-1070 Brussels (BE); CHOI, Jae Sik, B-1150 Woluwe-St-Pierre (BE); DURET, Nicolas, F-54000 Nancy (FR)
(74) Representative: de la Bigne, Guillaume Michel Marie
(86) International application number: PCT/EP2009/052848
(87) International publication number: WO 2009/112516

(56) References cited:
- EP-A- 1 712 754
- DE-A1-102004 061 259
- FR-A- 2 879 238
- US-A1- 2005 207 936

## Description

The present application relates to a method for heating a SCR system using resistive heating elements and also to an SCR system suitable for the application of this method.

Legislation on vehicle and heavy goods vehicle emissions stipulates, amongst other things, a reduction in the release of nitrogen oxides NOₓ into the atmosphere. One known way to achieve this objective is to use the SCR (Selective Catalytic Reduction) process which enables the reduction of nitrogen oxides by injection of a reducing agent, generally ammonia, into the exhaust line. This ammonia may derive from the pyrolytic decomposition of an ammonia precursor solution, whose concentration may be that of the eutectic. Such an ammonia precursor is generally a urea solution.

With the SCR process, the high levels of NOₓ produced in the engine during combustion at optimized efficiency are treated in a catalyst on exiting the engine. This treatment requires the use of the reducing agent of extreme quality at a precise concentration. The solution is thus accurately metered and injected into the exhaust gas stream where it is hydrolysed before converting the nitrogen oxide (NOₓ) to nitrogen (N₂) and water (H₂O).

In order to do this, it is necessary to equip the vehicles with a tank containing an additive (generally urea) solution and also a device for metering the desired amount of additive and injecting it into the exhaust line. In general, the SCR device comprises, besides the additive tank, an injector, a pump, and a urea feed line.

In order to be able to correctly meter the additive solution into the exhaust gases, it is known practice to incorporate, into the additive tank, elements such as a level gauge, a temperature sensor, a quality sensor, a resistive heating element, etc. Patent US 6,063,350 proposes, for example, to group these various components together on the mounting plate of the pump, positioned on the upper wall of the tank.

US-A-2005/207936 A1 discloses a system for diagnosing the quality of a reagent solution, which may comprise a reagent solution source for supplying the reagent solution to an emissions catalyst of an internal combustion engine. Means may be provided for determining a quality value corresponding to the quality of the reagent solution. A first filter may receive the quality value and produce a first filtered quality value, and a first comparator may compare the filtered quality value to a threshold and produce a fault value if the first filtered quality value crosses the threshold. Alternatively or additionally, a second filter may receive the quality value and produce a second filtered quality value. A second comparator may compare a difference between the first and second filtered quality values to another threshold and produce another fault value if the difference crosses that threshold.

In a certain embodiment, a control computer is operable to determine the temperature of the reagent solution with the reagent holding tank by monitoring the temperature signal produced by the temperature sensor, and to compare the reagent solution temperature T_{R} to a freezing temperature T_{F} (par. 64). The control computer is operable to activate the reagent holding tank heater by producing an appropriate activation signal at the heater control output. Thereafter, the control computer is operable to again determine the temperature, T_{K}, of the reagent solution within the reagent holding tank, and at the following step the control computer is operable to compare T_{R} to a threshold temperature T_{TH}. (par. 65). In one embodiment, if the control computer determines that T_{R} is greater than T_{TH,} the computer is operable to deactivate the reagent holding tank heater by producing an appropriate heater deactivation signal at the heater control output, and to enable for operation both the reagent quality monitoring logic block and the reagent dosing block by producing active enable signals at both of the enable outputs (par. 66).

During the start-up of the SCR process, the plate may be subjected to a temperature rise capable of causing a deterioration of the components grouped together on the mounting plate of the additive tank.

The present invention aims to solve this problem and is based on the idea of taking into account the values of the temperature of the surroundings of the SCR device and of the temperature in the tank to decide whether or not to activate a device for heating the feed lines of the SCR system, and/or for heating the urea tank and/or to decide when to start the pump.

Hence, the present application relates to a method for heating a urea SCR system comprising at least one line for circulating the urea and a device for heating said lines, the method using a temperature probe capable of measuring the ambient temperature, the method comprising the following steps:
1. the ambient temperature Tamb is measured;
2. Tamb is compared to a setpoint value T1;
3. if Tamb < T1 then the heating device is activated and Tamb is measured again; Tamb is compared to a second setpoint value T2 > T1; if Tamb ≤ T2, the heating device is kept active;
4. if Tamb > T2, the heating device is deactivated and the first step of the method is returned to.

The application also relates to a method for starting a pump of a urea SCR system comprising a urea tank, a temperature probe in the tank and a urea injector, the method comprising the following steps:
1. the temperature Tres in the tank is measured;
2. the EPA time is determined; a timer is started:
3. Tres is measured again;
4. Tres is compared to a setpoint temperature T3 and the counter value is compared to EPA;
5. if Tres < T3 and if the counter value is < EPA, the method proceeds to the preceding step;
6. the pump is started and the pressure level at the pump outlet is measured;
7. if the pressure level is stabilized and corresponds to a setpoint level P, the injector is activated;
8. if the pressure level is not stabilized or does not correspond to the setpoint level P after a time t0, the pump is stopped for a waiting time t1; the method goes back to step 6.

The application additionally relates to a method for heating a urea tank in a urea SCR system comprising at least said tank, a temperature probe in the tank and a device for heating the tank, the method comprising the following steps:
1. the temperature Tres in the tank is measured;
2. Tres is compared to a setpoint value T4;
3. if Tres > T4 the method proceeds to step 2;
4. if Tres < T4, the heating device is activated, a timer is started and the timer value is measured; if the timer value is less than a value t3, the method goes back to step 4;
5. the heating device is deactivated and the temperature Tres in the tank is measured after a time t4; if Tres is below a setpoint temperature T5, the method goes back to step 4;
6. the method goes back to step 1.

The expression "SCR system" is understood to mean a system for the catalytic reduction of the NOₓ from the exhaust gases of an internal combustion engine, preferably of a vehicle, using urea as a liquid ammonia precursor.

The term "urea" is understood to mean any, generally aqueous, solution containing urea. The invention gives good results with eutectic water/urea solutions for which there is a quality standard: for example, according to the standard DIN 70070, in the case of the AdBlue^{®} solution (commercial solution of urea), the urea content is between 31.8% and 33.2% (by weight) (i.e. 32.5 +/-0.7 wt%), hence an available amount of ammonia between 18.0% and 18.8%. The invention may also be applied to the urea/ammonium formate mixtures, also in aqueous solution, sold under the trade name Denoxium™ and of which one of the compositions (Denoxium-30) contains an equivalent amount of ammonia to that of the AdBlue^{®} solution. The latter have the advantage of only freezing from -30°C onwards (as opposed to -11°C), but have the disadvantages of corrosion problems linked to the possible release of formic acid. The present invention is particularly advantageous in the context of eutectic water/urea solutions.

As mentioned previously, SCR systems generally comprise at least one tank for storing the urea solution and also a system for feeding this to the exhaust gases, which generally comprises active components such as a pump, filter, valve(s), conduits (feed and/or return conduits).

The idea behind the present invention may be generalized to any component of a SCR system. It may also be combined with the invention of copending application EP2008/062183 in the name of the Applicant, which also deals with the problem of overheating in urea components and proposes therefore to use at least two resistive heating elements (R1, R2), one of which (R1) is intended for heating one or some (part(s) of) component(s) always in contact with a substantial amount of urea and the other (R2) is intended for heating one or some (part(s) of) component(s) which are sometimes not in contact with a substantial amount of urea, and according to which, when starting the system in freezing conditions, the resistive element R1 is activated but the resistive element R2 is activated only when its component is actually in contact with a substantial amount of urea. The problem of overheating may still be present at the upper part of R1.

Alternatively to this solution, some car manufacturers specify a given duration for which the tank must be heated, which duration has been determined experimentally in order to provide a minimum liquid quantity so as to be able to start the pump. As an example, the following table gives experimental data for a urea tank of 7.5L equipped with a flexible heater extending inside the tank and with a temperature sensor located in the upper part of the heater corresponding to a zone of the tank that may be more easily emerged (i.e. not in contact with urea) and accordingly where overheating may occur more regularly. The tank is placed in a cold chamber where the temperature is maintained at a constant value of - 9°C. The flexible heater is actuated with a constant heating power, continuously, during a period fixed by a given specification (20 min. in this case). During the experiments, the time needed for a temperature (Tcpt) in the tank to reach a safeguard temperature (Tsaf) of 100°C in the upper area of the heater was measured. The maximum temperature (Tmax) that was reached in the upper area of the heater after 20 minutes was also measured and the table shows that this maximum temperature (Tmax) may exceed an overheating temperature (Tover) of 120°C for low volumes of urea in the tank (ie. 2 first sets of data). When the volume of urea corresponds almost to the full capacity of the tank (ie. last set of data with a volume of 6.5L), there is no overheating because the heater is almost immerged in urea.

| Cold chamber temperature | Volume of urea | Time to reach 100°C in the upper area of the heater | Tmax in the upper area of the heater | Overheating (Tmax > 120°C) |
|---|---|---|---|---|
| -9°C | 2 L | 0:05:57 | 127.82°C | Yes |
| -9°C | 3 L | 0:05:54 | 121.01°C | Yes |
| -9°C | 6.5 L | 100°C not reached after | 21.30°C | No |
| | | 1:10:00 | | |

Hence, such a strategy leads to overheating of the tank and may lead to some damage to it and/or to components inside of it.

The present invention aims at solving these problems of the prior art heating strategies.

For this purpose the invention relates to a process for heating a urea component of a SCR system comprising besides said component, a temperature sensor and a heating device in the component, according to which:
1. the temperature (Tcpt) of the liquid in the component is determined and compared to a 1^{st} setpoint (T0);
2. if the temperature (Tcpt) is greater than the 1^{st} setpoint (T0), step 1 is repeated;
3. if the temperature (Tcpt) is less than or equal to the 1^{st} setpoint (T0), the heating device is actuated;
4. the time during which the heating device is actuated is measured and the heating device is stopped if this time is greater than a time t1;
5. the temperature (Tcpt) is determined after a time t2 and compared to a 2^{nd} setpoint (T1 with T1>T0); if the temperature (Tcpt) is less than or equal to the 2^{nd} setpoint (T1) the heating device is actuated and step 4 is repeated;
6. if the temperature (Tcpt) is greater than the 2^{nd} setpoint (T1), the heating device is stopped and step 1 is repeated.

The present invention is advantageously applied to diesel engines, and in particular to the diesel engines of heavy goods vehicles.

The component that can be heated by the process of the invention generally is a hollow component like a tank, a line, a connector... For sake of simplicity, the component will be referred hereafter as "tank", this term being hence not limitative.

As explained previously, the liquid for which the invention is intended is a liquid capable of freezing or solidifying (setting solid) when the temperature reaches a low temperature threshold. This may, for example, be an aqueous solution. One liquid to which the present invention applies particularly well is urea or another reducing agent that can be used in the SCR system of an engine.

Preferably, the device heating the component is also a flexible heater.

According to the invention the heating device is actuated if the temperature (Tcpt) in the tank is less than the 1^{st} setpoint (T0). The 1^{st} setpoint (T0) is chosen firstly so as to prevent freezing of the liquid in the tank. As described above, the liquid in the tank may be a urea solution that freezes at a freezing temperature of -11°C (eutectic 32.5 wt% urea solution). Therefore the 1^{st} setpoint (T0) is chosen so as to be greater than or equal to the freezing temperature of the liquid, and in particular to a temperature where the liquid begins to solidify.

But the freezing temperature of the solution may increase with regard to ageing of the solution, i.e. with a change of the concentration of the solution. Therefore, in a preferred variant of the process, the 1^{st} setpoint (T0) is chosen so as to be greater than or equal to a freezing temperature that corresponds to the concentration of the urea solution after ageing of the solution.

In the process according to the invention, the temperature (Tcpt) in the tank is compared with the 2^{nd} setpoint (T1) with T1 > T0. The 2^{nd} setpoint (T1) is chosen so that when the temperature (Tcpt) in the tank is greater than the 2^{nd} setpoint (T1), the solution in the tank is defrost.

The temperature (Tcpt) in the tank is measured by a temperature sensor that is located at a specific location in the tank (e.g. a feeding zone in the tank) and is therefore not always representative of the temperature of the solution elsewhere in the tank. Therefore the 2^{nd} setpoint (T1) is preferably chosen so as to be sure that the solution is defrost almost everywhere in the tank.

More preferably, the 2^{nd} setpoint (T1) is also chosen so as to limit the energy consumption and to be sure that a minimum volume of urea is defrost for the injection in the SCR system.

In a particular embodiment of the process, the 2^{nd} setpoint (T1) may be determined so as to take account of the volume of the solution present in the tank.

In the process according to the invention, the heating device is actuated for the time t1.

As described above, the process aims to prevent overheating in the tank. Overheating can be characterised by an overheating temperature (Tover) above which part of the SCR system, and in particular components, may be deteriorated. The overheating temperature can be determined experimentally.

In the context of the invention, the time t1 corresponds in general to the time necessary for the temperature (Tcpt) to exceed the overheating temperature (Tover) when the heating device is actuated. One possible way to determine the time t1 is to heat with a specific power and in a continuous way a determined volume of a urea solution in a tank and to measure the time after which the temperature (Tcpt) in the tank exceeds the overheating temperature (Tover).

Preferably, the time t1 corresponds to the time necessary for the temperature (Tcpt) to exceed a safeguard temperature (Tsaf) with Tsaf < Tover.

In the process according to the invention, the temperature (Tcpt) is determined after the time t2 has elapsed from the moment when the heating device is stopped. The time t2 corresponds to the time estimated for the temperature (Tcpt) to reach a stabilised value after the heating is switched off.

In the method according to the invention, the heating of the SCR system is preferably also adjusted during the operation of the system (when the vehicle is being driven) in case of freezing. Preferably, this adjustment is carried out using simple switches controlled as a function of the reading of the temperature sensors. Preferably the heating device is actuated by means of a simple switch ON/OFF, i.e. when the switch is triggered on, the heating device is actuated, and when the switch is triggered off, the heating device is stopped.

Commercial sensors have an accuracy of around one °C. Therefore it is advantageous to adjust over a wider range (e.g. of at least 2°C) to prevent the untimely activation of the relays (MOSFET relays) and therefore to limit the wear thereof. In particular, it is advantageous for the tank to be equipped with a temperature sensor; for the heating of the SCR system to be adjusted during normal operation of the system using switches controlled by the temperature sensor; for the switches to activate the heating device for a time t1 when the temperature read by the sensor drops below the 1^{st} setpoint (T0), for the temperature given by the sensor to be read after a time t2 and for the switches to deactivate the heating device when the temperature read by the sensor reaches/exceeds the 2^{nd} setpoint (T1).

The following table gives experimental data for the urea tank described in the experiments above (referring to the prior art strategy) where a process according to the invention is applied. According to this process, the heater is powered under a constant voltage of 14V when it is actuated; times t1 and t2 correspond respectively to 6 minutes and 1 minute (based on the data in the previous table) while the 1^{st} setpoint (T0) corresponds to -8°C (i.e. temperature where an eutectic solution of urea begins to solidify) and the 2^{nd} setpoint (T1) corresponds to -3°C.

| Cold chamber temperature | Volume of urea | Time to reach 100°C in the upper area of the heater | Overheating (Tmax > 120°C) | Urea available through the injector (150 mL/h) | Time needed to make 5 bar available for dosing (Specs.) | Time needed to make 5 bar available for dosing (experiments) |
|---|---|---|---|---|---|---|
| -9°C | 1 L | 100°C not reached after 1:08:00 | No | No pressure drop after 1:08:00 | 0:20:00 | 0:02:47 |
| -25°C | 6.5 L | 100°C not reached after 2:43:13 | No | No pressure drop after 2:43:13 | 0:45:00 | 0:38:13 |
| -17°C | 1 L | Peak of temp. at 100°C during 2*30s | No | No pressure drop after 2:34:58 | 0:26:30 | 0:24:13 |

In this table, experiments show that no overheating (ie. Tcpt does not exceed Tover, i.e. 120°C in this case) is observed whatever the volume of urea in the tank and the temperature of the cold chamber. Furthermore no pressure drop is observed in the SCR system and the time needed to make 5 bar available for dosing urea in the SCR system is lower than specifications.

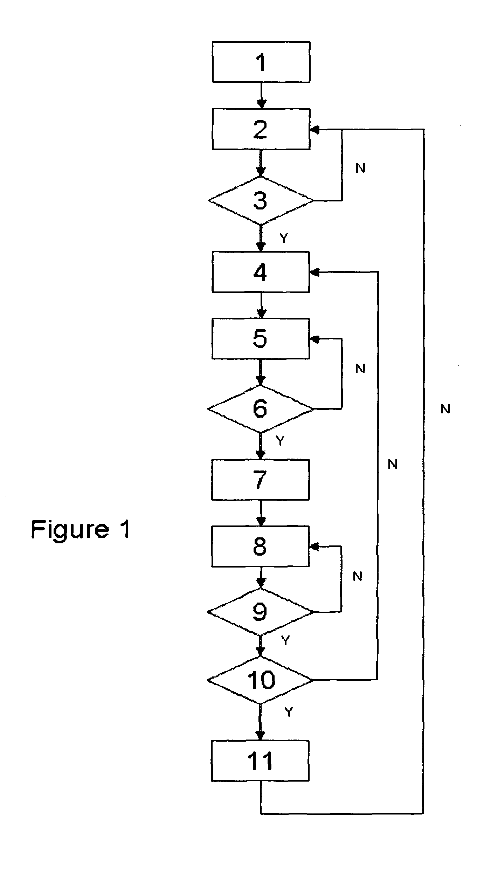

The present invention is illustrated, non-limitingly, by appended Figure 1.

Figure 1 consists of a block diagram of one preferred variant of the process according to the invention applied to a system for the injection of urea into the exhaust gases of an internal combustion engine (or SCR system).

At the beginning of the process (step 1), a heating device is OFF.

A system controller measures the temperature (Tcpt) in a tank (step 2) and verifies (step 3) whether the temperature (Tcpt) of the liquid in the tank is less than or equal to a 1^{st} setpoint (T0).

If this is not the case (N or NO), the controller keeps verifying whether the temperature (Tcpt) is less than or equal to the 1^{st} setpoint (T0) (loop between steps 3 and 2).

If this is the case (Y or YES), the heating device is actuated (step 4) for a time t1 during which the tank is heated. The time elapsed from the actuation of the heating device is measured at step 5 and the process checks at step 6 if the time elapsed is greater than t1. If it is not the case the process continues at step 5 and a loop between steps 5 and 6 starts. If it is the case the heating device is stopped (step 7). The time elapsed from the stop of the heating device is measured at step 8 and the process checks at step 9 if the time elapsed is greater than t2. If it is not the case the process continues at step 8 and a loop between steps 8 and 9 starts. If it is the case the process verifies (step 10) whether the temperature (Tcpt) is greater than a 2^{nd} setpoint (T1).

The time t1 and t2 may be chosen experimentally so as to avoid overheating of components in the SCR system and in particular to avoid that the temperature (Tcpt) in the tank exceeds a safeguard temperature (e.g. 100°C) or an overheating temperature (e.g. 120 °C) whatever the volume of urea contained in the tank.

If the temperature (Tcpt) is less than or equal to the 2^{nd} setpoint (T1 with T1>T0), the process continues at step 4 and the heating device is actuated.

If the temperature (Tcpt) is greater than the 2^{nd} setpoint (T1), the heating device is stopped (step 11) and the process continues with step 2.

## Claims

1. Process for heating a urea component of a SCR system comprising besides said component, a temperature sensor, a heating device in the component, according to which :
1. the temperature (Tcpt) of the liquid in the component is determined and compared to a 1^{st} setpoint (TO);
2. if the temperature (Tcpt) is greater than the 1^{st} setpoint T0, step I is repeated;
3. if the temperature (Tcpt) is less than or equal to the 1^{st} setpoint T0, the heating device is actuated,
4. the time during which the heating device is actuated is measured and the heating device is stopped if this time is greater than a time t1 ;
5. the temperature (Tcpt) is determined after a time t2 and compared to a 2^{nd} setpoint T1, with T1>T0, if the temperature (Tcpt) is less than or equal to the 2^{nd} setpoint T1 the heating device is actuated and step 4 is repeated;
6. if the temperature (Tcpt) is greater than the 2^{nd} septoint T1, the heating device is stopped and step 1 is repeated.

2. Process according to the preceding claim, in which the liquid in the component is urea.

3. Process according to any one of the preceding claims, in which the component is a tank.

4. Process according to any one of the preceding claims, in which the heating device is a flexible heater.

5. Process according to any one of the claims 2 to 4, in which the 1^{st} setpoint (T0) is greater than or equal to a freezing temperature of the urea.

6. Process according to the preceding claim, in which the 1^{st} setpoint (T0) is greater than or equal to a freezing temperature that corresponds to the concentration of the urea after ageing of the urea.

7. Process according to any one of the preceding claims, in which the time t1 corresponds to the time necessary for the temperature (Tcpt) to exceed a safeguard temperature (Tsaf) with Tsaf < Tover where Tover is an overheating temperature.

## Patentansprüche

1. Verfahren zum Erhitzen einer Harnstoffkomponente eines SCR-Systems, welches über die Komponente hinaus einen Temperatursensor aufweist sowie eine Heizvorrichtung in der Komponente, wobei:
1. die Temperatur (Tcpt) der Flüssigkeit in der Komponente bestimmt wird und mit einem 1. Sollwert T0 verglichen wird;
2. wenn die Temperatur (Tcpt) größer als der 1. Sollwert T0 ist, Schritt 1 wiederholt wird;
3. wenn die Temperatur (Tcpt) kleiner oder gleich dem 1. Sollwert T0 ist, die Heizvorrichtung aktiviert wird;
4. die Zeit gemessen wird, während derer die Heizvorrichtung aktiviert ist, und die Heizvorrichtung außer Betrieb gesetzt wird, wenn diese Zeit größer ist als eine Zeit t1;
5. die Temperatur (Tcpt) nach einer Zeit t2 bestimmt und mit einem 2. Sollwert T1 verglichen wird, mit T1 > T0, und dann, wenn die Temperatur (Tcpt) kleiner oder gleich dem 2. Sollwert T1 ist, die Heizvorrichtung aktiviert wird und Schritt 4 wiederholt wird;
6. wenn die Temperatur (Tcpt) größer als der 2. Sollwert T1 ist, die Heizvorrichtung außer Betrieb gesetzt und Schritt 1 wiederholt wird.

2. Verfahren nach dem voranstehenden Anspruch, bei welchem die Flüssigkeit in der Komponente Harnstoff ist.

3. Verfahren nach einem der voranstehenden Ansprüche, bei welchem die Komponente ein Tank ist.

4. Verfahren nach einem der voranstehenden Ansprüche, bei welchem die Heizvorrichtung ein flexibles Heizgerät ist.

5. Verfahren nach einem der Ansprüche 2 bis 4, bei welchem der 1. Sollwert (T0) größer oder gleich einer Erstarrungstemperatur des Harnstoffs ist.

6. Verfahren nach dem voranstehenden Anspruch, bei welchem der 1. Sollwert (T0) größer oder gleich einer Erstarrungstemperatur ist, welche der Konzentration des Harnstoffs nach Alterung des Harnstoffs entspricht.

7. Verfahren nach einem der voranstehenden Ansprüche, bei welchem die Zeit t1 jener Zeit entspricht, die dazu benötigt wird, dass die Temperatur (Tcpt) eine Sicherungstemperatur (Tsaf) überschreitet, mit Tsaf < Tover, wobei Tover eine Überhitzungstemperatur ist.

## Revendications

1. Procédé de chauffage d'un composant d'urée d'un système SCR comportant, en plus dudit composant, un capteur de température, un dispositif de chauffage dans le composant, selon lequel :
1. la température (Tcpt) du liquide dans le composant est déterminée et comparée à un 1^{er} point de consigne T0,
2. si la température (Tcpt) est supérieure au 1^{er} point de consigne T0, l'étape 1 est répétée,
3. si la température (Tcpt) est inférieure ou égale au 1^{er} point de consigne T0, le dispositif de chauffage est actionné,
4. la durée pendant laquelle le dispositif de chauffage est actionné est mesurée et le dispositif de chauffage est arrêté si cette durée est supérieure à un temps t1,
5. la température (Tcpt) est déterminée après un temps t2 et comparée à un 2^{nd} point de consigne T1, avec T1 > T0, si la température (Tcpt) est inférieure ou égale au 2^{nd} point de consigne T1, le dispositif de chauffage est actionné et l'étape 4 est répétée,
6. si la température (Tcpt) est supérieure au 2^{nd} point de consigne T1, le dispositif de chauffage est arrêté et l'étape 1 est répétée.

2. Procédé selon la revendication précédente, dans lequel le liquide dans le composant est l'urée.

3. Procédé selon l'une quelconque des revendications précédentes, dans lequel le composant est un réservoir.

4. Procédé selon l'une quelconque des revendications précédentes, dans lequel le dispositif de chauffage est un élément chauffant souple.

5. Procédé selon l'une quelconque des revendications 2 à 4, dans lequel le 1^{er} point de consigne (T0) est supérieur ou égal à une température de congélation de l'urée.

6. Procédé selon la revendication précédente, dans lequel le 1^{er} point de consigne (T0) est supérieur ou égal à une température de congélation qui correspond à la concentration de l'urée après vieillissement de l'urée.

7. Procédé selon l'une quelconque des revendications précédentes, dans lequel le temps t1 correspond au temps nécessaire pour que la température (Tcpt) dépasse une température de protection (Tsaf) avec Tsaf < Tover où Tover est une température de surchauffe.
